# EUROPÄISCHE PATENTANMELDUNG

(11) **EP 3 034 299 A1**
(43) Veröffentlichungstag der Anmeldung: **22.06.2016**
(21) Anmeldenummer: 14199466.5
(22) Anmeldetag: 19.12.2014
(51) Int. Cl.: B32B 27/08, B32B 5/02, B32B 27/12, B32B 27/32, B32B 27/34, B32B 27/36, B32B 27/40

(54) **Verfahren zur Herstellung eines Verbunds sowie ein Verbund**

(71) Anmelder: Emerell AG, 6203 Sempach Station (CH)
(72) Erfinder: VORTKORT, Jörg, 21445 Wulfsen (DE); SCHULTHESS, Adrian, 1734 Tentlingen (CH)
(74) Vertreter: Hepp Wenger Ryffel AG

(57) **Zusammenfassung**

Verbund sowie Verfahren zur Herstellung eines Verbunds (1) aus mindestens drei Schichten mit einem Träger (2), insbesondere einem Gewebe, Gewirke, Netz, Vlies, Gitter oder Gelege, einer ersten dem Träger zugewandten Polymerschicht (3), einer zweiten dem Träger abgewandten, an die erste Polymerschicht (3) angrenzende Polymerschicht (4). Die mindestens drei Schichten werden unter Bedingungen von Druck und Temperatur zusammengeführt, die derart gewählt sind, dass ein zumindest partielles Eindringen der ersten Polymerschicht (3) in den Träger (2) gewährleistet ist, wobei die Verbundhaftung zwischen der ersten Polymerschicht (3) und dem Träger (2) mindestens ≥ 0.2 N/mm beträgt.

## Beschreibung

Die Erfindung betrifft ein Verfahren zur Herstellung eines Verbunds aus mindestens drei Schichten sowie einem Verbund gemäss den Oberbegriffen der unabhängigen Ansprüche.

Verfahren zur Herstellung von Verbunden kommen bei der Produktion von mehrschichtigen Verbunden zum Einsatz. Dabei ist es meist erforderlich prozessangepasste und effiziente Verfahren zu gewährleisten.

Verfahren zur Herstellung von Verbunden sowie mehrschichtige Verbunde sind bekannt. Ein solcher Verbund wird beispielsweise in EP 0 966 352 B1 beschrieben. Ein Polyamidpolymerfilm weist Schichten aus Filmen mit einem Schmelzpunkt von weniger als 220°C auf, wobei das Polyamid des Polymerfilms bestimmte Anforderungen hinsichtlich des Polymergrundgerüstes, insbesondere der Alkylverzweigung erfüllen muss. Der Polyamidpolymerfilm ist an ein Gewebe aus Polyamid oder Polyester gebunden.

EP 1 518 761 beschreibt ein Verbundschichtmaterial mit einem Polymerfilm und einer Trägerschicht. Der Polymerfilm weist zwei Schichten auf. Dabei werden die erste Schicht aus einem Material mit einer Glasübergangstemperatur von weniger als -10°C und die zweite aus einem Material mit einer Glasübergangstemperatur von weniger als 20°C gebildet.

Dabei ist allerdings eine ausreichende Verbundhaftung nicht sichergestellt.

Es ist daher Aufgabe der Erfindung die Nachteile des Stands der Technik zu überwinden und insbesondere einen mehrschichtigen Verbund zur Verfügung zu stellen, welcher eine definierte Verbundhaftung zwischen einem Träger und einer aufliegenden Polymerschicht gewährleistet.

Erfindungsgemäss wird die Aufgabe durch ein Verfahren zur Herstellung eines Verbundes und einen Verbund gemäss den Merkmalen der unabhängigen Ansprüche gelöst.

Die Erfindung betrifft ein Verfahren zu Herstellung eines Verbunds aus mindestens drei Schichten. Die mindestens drei Schichten setzten sich aus einem Träger, insbesondere einem Gewebe, Gewirke, Netz, Vlies, Gitter oder Gelege, einer ersten dem Träger zugewandten Polymerschicht und einer zweiten dem Träger abgewandten, an die erste Polymerschicht angrenzende Polymerschicht zusammen. Dabei werden die mindestens drei Schichten unter Bedingungen von Druck und Temperatur zusammengeführt werden, die derart gewählt sind, dass ein zumindest partielles Eindringen der ersten Polymerschicht in den Träger gewährleistet ist. Die Verbundhaftung zwischen der ersten Polymerschicht und dem Träger beträgt mindestens ≥ 0.2 N/mm. Auf diese Weise wird ein Verbund mit einer definierten Verbundhaftung bereitgestellt. Insbesondere wird eine ausreichende Verbundhaftung zwischen dem Träger und der dem Träger zugewandten ersten Polymerschicht sichergestellt. Derart werden robuste und beständige Verbunde hergestellt, welche wie nachfolgend beschrieben, weitere vorteilhafte Eigenschaften aufweisen.

Verbundhaftungen wie hier und nachfolgend beschrieben werden standardmässig an einem Muster des Verbundes wie im Folgenden beschrieben gemessen. Klebebänder mit einer Haftung zur Oberfläche von mindestens 0.3 N/mm bevorzugt 0.5 N/mm werden auf beide Seiten des Musters angebracht. Der Verbund wird in einer Zugprüfanlage in einem 90°-Schälversuch getestet, gemessen nach DIN 53550 "Trennversuch an haftend verbundenen Gewebelagen".

Die zweite Polymerschicht kann im Rahmen des erfindungsgemässen Verfahrens derart ausgestaltet sein, dass sie nicht in den Träger eindringt. Auf diese Weise wird die Funktionalität der zweiten Polymerschicht nicht beeinträchtigt. Nur die erste Polymersicht vermittelt die Haftung zum Träger, während spezifische Eigenschaften des Verbundes durch die dem Träger abgewandte zweite Polymerschicht, welche an die erste Polymerschicht angrenzt, vermittelt werden.

Bevorzugt ist die erste Polymerschicht derart ausgestaltet, dass sie den Träger nicht vollständig durchdringt. Auf diese Weise ist ein partielles Eindringen der ersten Polymerschicht in den Träger sichergestellt. So muss vergleichsweise wenig Material, insbesondere eine vergleichsweise dünne erste Polymerschicht, bereitgestellt werden.

Die mindestens drei Schichten können nacheinander bereitgestellt werden, insbesondere in einem Kaskadenextrusionsverfahren. Es kann ebenfalls ein Verbund aus einem Träger und einer erster Polymerschicht bereitgestellt werden. Eine zweite Polymerschicht wird auf diesen Verbund aufgetragen, insbesondere aufextrudiert. Optional kann auch die erste Polymerschicht zusammen mit der zweiten Polymerschicht auf den Träger aufgetragen, insbesondere coextrudiert, werden. Auf diese Weise kann das Herstellungsverfahren mit bestehenden Fertigungsstrassen ausgeführt werden.

Die erste Polymerschicht kann eine niedrigere Viskosität als die zweite Polymerschicht aufweisen. Die Viskosität der ersten Polymerschicht ist dabei jedoch mindestens ≥ 100 Pa*s. Die Viskosität wird mit einem Rotationsviskosimeter beispielsweise Physica MCR 301 der Firma Anton Paar bestimmt und ein Temperatur- und Frequenzsweep gemessen. Durch die vorgenannte niedrigere Viskosität ist ein optimiertes Auftragen der ersten Schicht auf den Träger sowie ein unwesentliches Vermischen, bzw. Ineinanderfliessen, der ersten und der zweiten Polymerschicht während des Herstellungsverfahrens sichergestellt.

Die zweite Polymerschicht kann flüssigkeitsundurchlässig, insbesondere wasserundurchlässig, und gasdurchlässig, insbesondere wasserdampfdurchlässig, sein. Die vorgenannten vorteilhaften Eigenschaften beziehen sich selbstverständlich auf die zweite Polymerschicht im End- bzw. Funktionszustand des Verbundes, also nach Abschluss und nicht während des Herstellungsverfahrens. Auf diese Weise dient die zweite Polymerschicht als Barriere für Stoffe im flüssigen Zustand, insbesondere als Barriere für flüssiges Wasser, wobei Stoffe in der Gasphase, insbesondere Wasserdampf, zu Zwecken des Gasaustausches den Verbund passieren können.

Des Weiteren kann mit dem erfindungegmässen Verfahren auch eine weitere, dritte Polymerschicht auf die zweite Polymerschicht aufgetragen, insbesondere aufextrudiert, werden. Alternativ kann die erste Polymerschicht zusammen mit der zweiten Polymerschicht und einer dritten Polymerschicht auf den Träger aufgetragen, insbesondere coextrudiert, werden. Die Eigenschaften dieser dritten Polymerschicht entsprechen im Wesentlichen den Eigenschaften der ersten Polymerschicht, welche bereits vorstehend erläutert sind.

Auf die dritte Polymerschicht kann ein, weiterer, zweiter Träger, insbesondere ein Gewebe, Gewirke, Netz, Vlies, Gitter oder Gelege, aufgetragen werden. Auf diese Weise wird ein fünflagiger Verbund bereitgestellt, der mit der Schichtenabfolge (i) Träger, (ii) erste Polymerschicht, (iii) zweite Polymerschicht, (iv) dritte Polymerschicht und (iv) zweiter Träger aufgebaut ist.

Mittels der dritten Polymerschicht wird eine gute Haftung zu dem zweiten Träger vermittelt.

Die zweite Polymerschicht kann derart ausgestaltet sein, dass sie im Rahmen des erfindungsgemässen Verfahrens nicht in den zweiten Träger eindringt. Auf diese Weise wird die Funktionalität der zweiten Polymerschicht nicht beeinträchtigt. Nur die dritte Polymersicht vermittelt die Haftung zum zweiten, der dritten Polymerschicht aufgelagerten Träger, während spezifische Eigenschaften des Verbundes durch die zwischen der ersten und der dritten positionierten zweiten Polymerschicht vermittelt werden.

Des Weiteren kann die dritte Polymerschicht derart ausgestaltet sein, dass sie den zweiten Träger nicht vollständig durchdringt. Auf diese Weise ist ein partielles Eindringen der dritten Polymerschicht in den zweiten Träger sichergestellt. So muss vergleichsweise wenig Material, insbesondere eine vergleichsweise dünne erste Polymerschicht, bereitgestellt werden.

Ein weiterer Aspekt der Erfindung betrifft einen Verbund erhältlich nach einem Verfahren wie vorstehend erläutert. Der Verbund weist mindestens drei Schichten auf. Die mindestens drei Schichten setzten sich aus einem Träger, insbesondere einem Gewebe, Gewirke, Netz, Vlies, Gitter oder Gelege, einer ersten dem Träger zugewandten Polymerschicht und einer zweiten dem Träger abgewandten, an die erste Polymerschicht angrenzende Polymerschicht zusammen. Dabei werden die mindestens drei Schichten unter Bedingungen von Druck und Temperatur zusammengeführt werden, die derart gewählt sind, dass ein zumindest partielles Eindringen der ersten Polymerschicht in den Träger gewährleistet ist. Die Verbundhaftung zwischen der ersten Polymerschicht und dem Träger beträgt mindestens ≥ 0.2 N/mm. Auf diese Weise wird ein Verbund mit einer definierten Verbundhaftung bereitgestellt. Insbesondere wird eine ausreichende Verbundhaftung zwischen dem Träger und der dem Träger zugewandten ersten Polymerschicht sichergestellt. Auf diese Weise wird ein robuster und beständiger Verbund hergestellt, welcher vorteilhafte Eigenschaften aufweist.

Die zweite Polymerschicht des Verbunds kann flüssigkeitsundurchlässig, insbesondere wasserundurchlässig, und gasdurchlässig, insbesondere wasserdampfdurchlässig, sein. Auf diese Weise dient die zweite Polymerschicht als Barriere für Stoffe im flüssigen Zustand, insbesondere als Barriere für flüssiges Wasser, wobei Stoffe in der Gasphase, insbesondere Wasserdampf, zu Zwecken des Gasaustausches den Verbund passieren können.

Des Weiteren kann eine weitere, dritte Polymerschicht auf die zweite Polymerschicht aufgelagert, insbesondere aufextrudiert, sein. Alternativ kann die erste Polymerschicht zusammen mit der zweiten Polymerschicht und einer dritten Polymerschicht auf den Träger aufgetragen, insbesondere coextrudiert, werden. Die Eigenschaften dieser dritten Polymerschicht entsprechen im Wesentlichen den Eigenschaften der ersten Polymerschicht, welche bereits vorstehend erläutert sind.

Auf die dritte Polymerschicht kann ein, weiterer, zweiter Träger, insbesondere ein Gewebe, Gewirke, Netz, Vlies, Gitter oder Gelege, aufgetragen werden. Auf diese Weise wird ein fünflagiger Verbund bereitgestellt, welcher vorgängig erläutert ist. Mittels der dritten Polymerschicht wird eine gute Haftung zu dem zweiten Träger vermittelt.

Die zweite Polymerschicht kann im Rahmen des erfindungsgemässen Verfahrens derart ausgestaltet sein, dass sie nicht in den Träger eingedrungen ist. Auf diese Weise wird die Funktionalität der zweiten Polymerschicht nicht beeinträchtigt. Nur die erste Polymersicht vermittelt die Haftung zum Träger, während spezifische Eigenschaften des Verbundes durch die dem Träger abgewandte zweite Polymerschicht, welche an die erste Polymerschicht angrenzt, vermittelt werden.

Des Weiteren kann die erste Polymerschicht derart ausgestaltet sein, dass sie den Träger nicht vollständig durchdringt. Auf diese Weise ist ein partielles Eindringen der ersten Polymerschicht in den Träger sichergestellt. So muss vergleichsweise wenig Material, insbesondere eine vergleichsweise dünne erste Polymerschicht, bereitgestellt werden.

Die zweite Polymerschicht kann derart ausgestaltet sein, dass sie im Rahmen des erfindungsgemässen Verfahrens nicht in den zweiten Träger eindringt. Auf diese Weise wird die Funktionalität der zweiten Polymerschicht nicht beeinträchtigt. Nur die dritte Polymersicht vermittelt die Haftung zum zweiten, der dritten Polymerschicht aufgelagerten Träger, während spezifische Eigenschaften des Verbundes durch die zwischen der ersten und der dritten positionierten zweiten Polymerschicht vermittelt werden.

Des Weiteren kann die dritte Polymerschicht derart ausgestaltet sein, dass sie den zweiten Träger nicht vollständig durchdringt. Auf diese Weise ist ein partielles Eindringen der dritten Polymerschicht in den zweiten Träger sichergestellt. So muss vergleichsweise wenig Material, insbesondere eine vergleichsweise dünne erste Polymerschicht, bereitgestellt werden.

Ein weiterer Aspekt der Erfindung betrifft die Verwendung eines Verbundes, wie vorstehend erläutert, als Dachunterspannbahn, als wasserdampfdurchlässige Membran für Gebäude, Schuhe oder Textilien. Des Weiteren ergeben sich vorteilhafte Verwendungen in der Automobilindustrie, bevorzugt als Cabrioverdecke, Hutablagen, Kofferraumauskleidungen oder Dachhimmel. Somit lassen sich die vorteilhaften Eigenschaften des Verbundes zu spezifischen Zwecken einsetzen.

### Physikalische Parameter:

Die verwendeten Träger weisen bevorzug ein Flächengewicht von 5 g/m² bis 300 g/m² auf. Besonders bevorzugt 10 g/m² bis 150 g/m². Die erste Polymerschicht weist bevorzugt ein Flächengewicht von 5 g/m² bis 100 g/m². Besonders bevorzug 10 g/m² bis 50 g/m2. Die zweite Polymerschicht weist bevorzugt ein Flächengewicht von 10 g/m² bis 250 g/m² auf, besonders bevorzugt 20 g/m² bis 200 g/m². Die dritte Polymerschicht weist bevorzugt das Flächengewicht der ersten Polymerschicht auf.

Bevorzugte Flächengewichte für einen Verbund aus einem Träger und zwei Polymerschichten sind für den Träger 20 g/m² bis 150 g/m², für die erste Polymerschicht 10 g/m² bis 50 g/m² und für die zweite Polymerschicht 20 g/m² bis 200 g/m².

Bevorzugte Flächengewichte für einen Verbund aus zwei Trägern und drei Polymerschichten sind für den ersten Träger 10 g/m² bis 150 g/m², für die erste Polymerschicht 10 g/m² bis 50 g/m² und für die zweite Polymerschicht 20 g/m² bis 200 g/m², für die dritte Polymerschicht 10 g/m² bis 50 g/m² und für den zweiten Träger 10 g/m² bis 150 g/m².

Chem. Zusammensetzungen oder Komponenten der Polymerschichten Für die Bereitstellung, insbesondere das Extrudieren, der Polymerschichten sind extrusionsfähige Polymere geeignet. Bevorzugt eignen sich Polyolefine, Polyamide, Polyester, Polyurethane und Mischungen daraus. Besonders bevorzugt für Anwendungen als Membran, beispielsweise als Dachunterspannbahn, ist die Verwendung eines thermoplastischen Polyurethanmaterials, insbesondere ein Polyetherpolyurethan, bevorzugt Desmopan 9370 A von Bayer. Besonders geeignet als thermoplastisches Material ist Elastollan 1075 A 10U von BASF, insbesondere MFR 84 g/10min mit 190°C/21.6kg gemessen, MFR 49 g/10min mit 190°C/21.6kg gemessen oder MFR 20 g/min mit 190°C/21.6kg gemessen. Neben Polyurethanen eignen sich auch wasserdampfdurchlässige Copolyester wie Arnitel. Besonders geeignet sind die Arnitel P oder V-Typen, beispielsweise Arnitel VT3104 MFR 14 g/19min bei 230°C/2.16 kg gemessen oder Arnitel VT 3108 MFR 10 g/10min bei 230°C/2.16kg gemessen.

Ein bevorzugtes Vlies ist beispielsweise ein Polyester-Vlies (PES) oder ein Polyester/Polypropylen-Vlies (PES/PP) oder ein Polypropylen-Vlies (PP). Die Vliese sind chemisch oder thermisch verfestigt, vernadelt oder wasserstrahlverfestigt. Beispielhaft sind Polyestervlies WJ 120PET-6700-90 120 g/m² von GS-Vliesstoffe, Polyestervlies 3201A 20 g/m² von GS-Vliesstoffe, Polyestervlies PET 080 OV 80 g/m² von GS-Vliesstoffe, PP-Spinvlies 90 g/m² von GS-Vliesstoffe oder Nonwoven 70 g/m² PP-Spunbond von DON & LOW, oder auch Vliese aus thermoplastischen Polyurethanen wie beispielsweise TPU MB 2ES100 100 g/m² von Innovatec.

### Ausführungsbeispiele

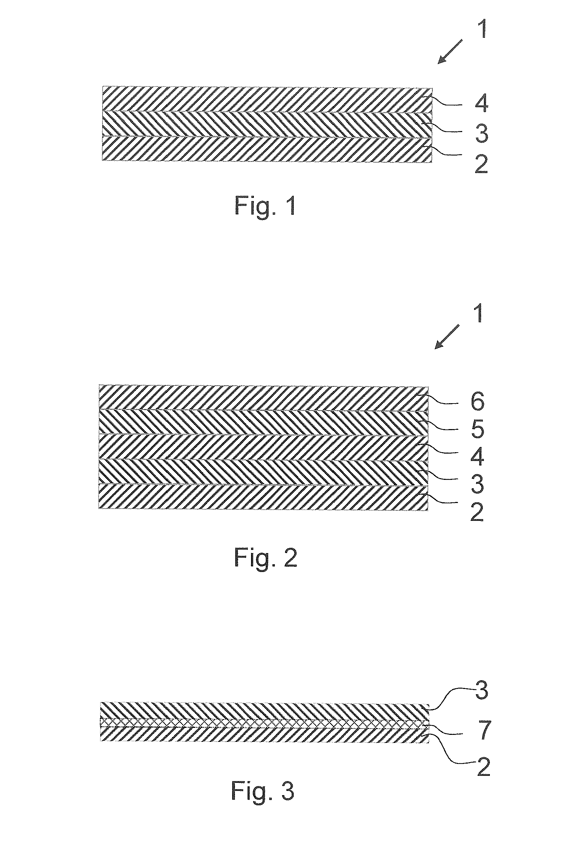

Beispiel 1 ist ein Mehrschichtverbund aus einem Träger und zwei Polymerschichten (vgl. Fig. 1). Der Träger umfasst PP-Spinnvlies 90 g/m² (GS-Vliesstoffe). Die erste dem Träger zugewandte Polymerschicht umfasst Elastollan 1075AU10 MFR 84g/10min, 10 g/m². Die zweite dem Träger abgewandte an die erste Polymerschicht angrenzenden Polymerschicht umfasst Elastollan 1075AU10 MFR 20g/10min, 70 g/m².

Beispiel 2 ist ein Mehrschichtverbund aus zwei Trägern und drei Polymerschichten (vgl. Fig. 2). Der erste und der zweite Träger umfasst PP-Spunbond, 70 g/m² (DON & LOW). Die erste dem ersten Träger zugewandte Polymerschicht und die dritte dem zweiten Träger zugewandte Polymerschicht umfasse Elastollan 1075AU10 MFR 84g/10min, 20 g/m². Die zweite den Trägern abgewandte an die erste und die dritte Polymerschicht angrenzende Polymerschicht umfasst Elastollan 1075AU10 MFR 20g/10min, 50 g/m².

Die Erfindung wird im Folgenden anhand von Abbildungen exemplarischer Ausführungsbeispiele näher erläutert.

Es zeigen schematisch:
- Fig. 1:: einen erfindungsgemässen dreischichtigen Verbund;
- Fig. 2:: einen bevorzugten fünfschichtigen Verbund;
- Fig. 3:: ein partielles Eindringen der ersten Polymerschicht in den angrenzenden Träger.

Figur 1 zeigt einen dreischichtigen Verbund 1, welcher aus einem Träger 2, einer dem Träger 2 zugewandten ersten Polymerschicht 3 und einer dem Träger 2 abgewandten und der ersten Polymerschicht 3 aufgelagerten zweiten Polymerschicht 4 aufgebaut ist (vergleiche Beispiel 1). Die zweite Polymerschicht 4 dringt dabei nicht wesentlich in die erste Polymerschicht 3 ein. Des Weiteren dringt sie nicht in den Träger 2 ein.

Figur 2 zeigt einen alternativen, bevorzugten fünfschichtigen Verbund 1 (vergleiche Beispiel 2). Der Verbund 1 weist die Abfolge von Komponenten mit Träger 2, erster Polymerschicht 3, zweiter Polymerschicht 4, dritter Polymerschicht 5 und zweitem Träger 6 auf. Die erste 3 und die dritter Polymerschicht 4 sind in ihren physikalischen Eigenschaften und chemischen Zusammensetzung im Wesentlichen identisch. Die erste Polymerschicht 3 vermittelt die Haftung zum Träger 2. Die dritte Polymerschicht vermittelt die Haftung zum zweiten Träger 6. Die zweite Polymerschicht 4 ist dementsprechend zwischen der ersten Polymerschicht 3 und der dritten Polymerschicht 5 positioniert und steht nicht in Kontakt mit dem Träger 2 und dem zweiten Träger 6. Die zweite Polymerschicht 4 ist bevorzugt wasserundurchlässig und wasserdampfdurchlässig.

Figur 3 zeigt schematisch einen Träger 2 und eine erste Polymerschicht 3 (vgl. Fig. 1 und 2; weitere Schichten sind nicht gezeigt). Der Träger 2 umfasst einen Bereich 7. Die erste Polymerschicht 3 ist derart ausgestaltet, dass sie bei der Herstellung des Verbunds 1 partiell in den Träger 2 eindringt und so eine optimale Haftung vermittelt wird. Der Bereich 7 entspricht dem Bereich des Trägers 2, in welchen die erste Polymerschicht 3 partiell eingedrungen ist. Die erste Polymerschicht 3 durchdringt den Träger 2 dabei nicht vollständig.

Bei einem fünflagigen Verbund (vgl. Fig. 2) gestaltet sich ein partielles Eindringen der dritten Polymerschicht 4 in den zweiten Träger 6 identisch (nicht gezeigt).

## Patentansprüche

1. Verfahren zur Herstellung eines Verbunds (1) aus mindestens drei Schichten mit
- einem Träger (2), insbesondere einem Gewebe, Gewirke, Netz, Vlies, Gitter oder Gelege,
- einer ersten dem Träger zugewandten Polymerschicht (3),
- einer zweiten dem Träger abgewandten, an die erste Polymerschicht (3) angrenzende Polymerschicht (4)
**dadurch gekennzeichnet, dass**
die mindestens drei Schichten unter Bedingungen von Druck und Temperatur zusammengeführt werden, die derart gewählt sind, dass ein zumindest partielles Eindringen der ersten Polymerschicht (3) in den Träger (2) gewährleistet ist, wobei die Verbundhaftung zwischen der ersten Polymerschicht (3) und dem Träger (2) mindestens ≥ 0.2 N/mm beträgt.

2. Verfahren nach Anspruch 1 **dadurch gekennzeichnet, dass** die zweite Polymerschicht (4) nicht in den Träger (2) eindringt.

3. Verfahren nach einem der Ansprüche 1 oder 2 **dadurch gekennzeichnet, dass** die erste Polymerschicht (3) den Träger (2) nicht vollständig durchdringt.

4. Verfahren nach einem der Ansprüche 1 bis 3 **dadurch gekennzeichnet, dass**
- die mindestens drei Schichten nacheinander bereitgestellt werden, insbesondere in einem Kaskadenextrusionsverfahren; oder, dass
- ein Verbund aus Träger (2) und erster Polymerschicht (3) bereitgestellt und die zweite Polymerschicht (4) aufgetragen, insbesondere aufextrudiert, wird; oder, dass
- die erste Polymerschicht (3) zusammen mit der zweiten Polymerschicht (4) auf den Träger (2) aufgetragen, insbesondere coextrudiert, wird.

5. Verfahren nach einem der Ansprüche 1 bis 4 **dadurch gekennzeichnet, dass** die erste Polymerschicht (3) eine niedrigere Viskosität als die zweite Polymerschicht (4) aufweist, jedoch mindestens mit einer Viskosität von ≥ 100 Pa*s.

6. Verfahren nach einem der Ansprüche 1 bis 5 **dadurch gekennzeichnet, dass** die zweite Polymerschicht (4) flüssigkeitsundurchlässig, insbesondere wasserundurchlässig, und gasdurchlässig, insbesondere wasserdampfdurchlässig, ist.

7. Verfahren nach einem der Ansprüche 1 bis 6 **dadurch gekennzeichnet, dass** eine dritte Polymerschicht (5) auf die zweite Polymerschicht (4) aufgetragen, insbesondere aufextrudiert, wird oder die erste Polymerschicht zusammen mit der zweiten Polymerschicht und einer dritten Polymerschicht auf den Träger aufgetragen, insbesondere coextrudiert, wird.

8. Verfahren nach Anspruch 7 **dadurch gekennzeichnet, dass** auf die dritte Polymerschicht (5) ein zweiter Träger (6), insbesondere ein Gewebe, Gewirke, Netz, Vlies, Gitter oder Gelege, aufgetragen wird.

9. Verbund (1) erhältlich nach einem Verfahren gemäss einem der Ansprüche 1 bis 8.

10. Verbund (1) nach Anspruch 9 **dadurch gekennzeichnet, dass** die zweite Polymerschicht (4) flüssigkeitsundurchlässig, insbesondere wasserundurchlässig, und gasdurchlässig, insbesondere wasserdampfdurchlässig, ist.

11. Verbund (1) nach einem der Ansprüche 9 oder 10 **dadurch gekennzeichnet, dass** eine dritte Polymerschicht (5) auf die zweite Polymerschicht (4) aufgetragen, insbesondere aufextrudiert, ist oder die erste Polymerschicht zusammen mit der zweiten Polymerschicht und einer dritten Polymerschicht auf den Träger aufgetragen, insbesondere coextrudiert, wird.

12. Verbund (1) nach Anspruch 11 **dadurch gekennzeichnet, dass** auf die dritte Polymerschicht (5) ein zweiter Träger (6), insbesondere ein Gewebe, Vlies, Gitter, Gelege, aufgetragen ist.

13. Verbund (1) nach einem der Ansprüche 9 bis 12 **dadurch gekennzeichnet, dass** die zweite Polymerschicht (4) nicht in den Träger (2) eingedrungen ist.

14. Verbund (1) nach einem der Ansprüche 9 bis 13 **dadurch gekennzeichnet, dass** die erste Polymerschicht (3) den Träger (2) nicht vollständig durchdringt.

15. Verwendung eines Verbunds (1) gemäss einem der Ansprüche 9 bis 14 als Dachunterspannbahn, als wasserdampfdurchlässige Membran für Gebäude, Schuhe oder Textilien, oder in der Automobilindustrie, bevorzugt als Cabrioverdecke, Hutablagen, Kofferraumauskleidungen oder Dachhimmel.
